(19) Europäisches Patentamt / European Patent Office / Office européen des brevets

(11) **EP 4 306 552 A1**

(12) **EUROPEAN PATENT APPLICATION**
published in accordance with Art. 153(4) EPC

(43) Date of publication:
**17.01.2024 Bulletin 2024/03**

(21) Application number: 22766819.1

(22) Date of filing: **22.02.2022**

(51) International Patent Classification (IPC):
$C08F\ 8/30$ (2006.01)     $C08K\ 7/06$ (2006.01)
$C08L\ 23/00$ (2006.01)     $C08L\ 23/36$ (2006.01)
$C08J\ 5/04$ (2006.01)

(52) Cooperative Patent Classification (CPC):
C08F 8/30; C08J 5/04; C08K 7/06; C08L 23/00;
C08L 23/36; Y02W 30/62

(86) International application number:
**PCT/JP2022/007220**

(87) International publication number:
**WO 2022/190857 (15.09.2022 Gazette 2022/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.03.2021 JP 2021037609**

(71) Applicant: **Mitsui Chemicals, Inc.
Tokyo 104-0028 (JP)**

(72) Inventors:
• **MATSUMOTO Hironori
Ichihara-shi, Chiba 299-0108 (JP)**
• **OGAWA Yoshiyuki
Ichihara-shi, Chiba 299-0108 (JP)**

(74) Representative: **Hoffmann Eitle
Patent- und Rechtsanwälte PartmbB
Arabellastraße 30
81925 München (DE)**

(54) **RECYCLED CARBON FIBER-REINFORCED POLYOLEFIN COMPOSITION AND USE OF SAME**

(57) An object of the present invention is to obtain a recycled carbon fiber-reinforced polyolefin composition containing recycled carbon fibers having a mechanical strength that is superior to that of a composition containing unused carbon fibers, and a molded product thereof, and the present invention relates to a recycled carbon fiber-reinforced polyolefin composition, containing 0.01 to 50 parts by mass of a modified polyolefin (A), 50 to 99 parts by mass of a polyolefin (B), and 1 to 80 parts by mass of a recycled carbon fiber (C), wherein a total of (A), (B) and (C) is 100 parts by mass, wherein the modified polyolefin (A) is a modified polyolefin obtained by reacting a modified polyolefin (D) having a group that reacts with a carbodiimide group and a carbodiimide group-containing compound (E).

EP 4 306 552 A1

**Description**

Technical Field

The present invention relates to a recycled carbon fiber-reinforced polyolefin composition containing recycled carbon fibers having a mechanical strength that is superior to that of a composition containing unused carbon fibers, and use thereof.

Background Art

Polyolefins (olefin polymers) such as polypropylene and polyethylene are molded by various methods and used for various purposes. Polyolefins such as polypropylene are, on the other hand, inferior to engineering plastics such as polyamide and polycarbonate in terms of mechanical properties such as heat resistance, rigidity, and tensile strengths, and therefore, inorganic fillers such as talc and heat-resistance fibers such as glass fibers and carbon fibers are compounded (added) as reinforcements, depending on their applications.

However, the reinforcement effect of reinforcements is often insufficient because dispersion of the reinforcements and adhesiveness between the reinforcement and polyolefin are poor. As a method for improving adhesiveness between the reinforcement and a polyolefin, adding for example, maleic anhydride modified polypropylenes have been known, and the mechanical properties of the resulting molded product have been known to be improvable by adding for example, maleic anhydride modified polypropylenes to improve adhesiveness between the polyolefin and the reinforcement.

For example, Patent Literature 1 discloses a carbon fiber resin composition in which carbon fibers treated with a sizing agent were treated with maleic anhydride-modified polypropylene. Moreover, Patent Literature 2 discloses a carbon fiber resin composition with improved impact resistance properties by delocalizing an adhesive compound at a carbon fiber interface, thereby to control a ratio of the adhesive compound present around the carbon fibers.

In recent years, carbon fiber-reinforced materials (CFRP) containing carbon fibers have been used for components of for example, aircraft and automobiles because of their high strength, high rigidity, and advantageous light weight.

Carbon fibers are, on the other hand, expensive, thereby a method of extracting carbon fibers contained in used CFRP and producing recycled carbon fibers, has been proposed (for example, Patent Literature 3).

If carbon fiber composite materials with high strength and elasticity can be produced by using inexpensive recycled carbon fibers instead of expensive unused carbon fibers (hereinafter appropriately referred to as "carbon fibers"), they are preferred from the viewpoints of economy and minimizing the burden on the environment. However, even a sizing agent attached to a surface of recycled carbon fibers produced from used CFRP is generally thermally decomposed due to being affected by the manufacturing process, as compared with the case of unused carbon fibers, resulting in carbon fibers with the extremely low amount of fiber surface functional groups. Therefore, adding an acid-modified polyolefin that is a common compatibilizer singly causes poor adhesiveness with a surface of the carbon fibers, resulting in poor compatibility between the carbon fiber and a matrix resin and poor dispersion of the carbon fibers, thereby being unable to obtain a molded product with sufficient mechanical properties.

Citation List

Patent Literature

[Patent Literature 1] JP2003-277525A
[Patent Literature 2] JP2015-110749A
[Patent Literature 3] JP2017-82037A

Summary of Invention

Technical Problem

An object of the present invention is to obtain a recycled carbon fiber-reinforced polyolefin composition containing recycled carbon fibers having a mechanical strength that is superior to that of a composition containing unused carbon fibers, and a molded product thereof.

Solution to Problem

The present invention relates to a recycled carbon fiber-reinforced polyolefin composition, containing 0.01 to 50 parts by mass of a modified polyolefin (A), 50 to 99 parts by mass of a polyolefin (B), and 1 to 80 parts by mass of a recycled carbon fiber (C), wherein a total of (A), (B) and (C) is 100 parts by mass,
wherein the modified polyolefin (A) is a modified polyolefin obtained by reacting a modified polyolefin (D) having a group that reacts with a carbodiimide group, with a carbodiimide group-containing compound (E).

Advantageous Effects of Invention

The recycled carbon fiber-reinforced polyolefin composition of the present invention has a mechanical strength that is superior to that of a composition containing unused carbon fibers. Therefore, it can be used as a raw material of a molded product in which a composition containing unused carbon fibers is used, thus enabling cost reduction.

Description of Embodiments

<<Modified polyolefin (D) having a group that reacts with a carbodiimide group>>

The modified polyolefin (D) having a group that reacts with a carbodiimide group according to the present invention (hereinafter may be referred to as "modified polyolefin (D)") is a modified polyolefin in which a compound (d) having a group that reacts with a carbodiimide group (hereinafter may often be referred to as "compound (d)") was introduced into a polyolefin.
The modified polyolefin (D) according to the present invention usually has a content of compound (d) of 0.1 to 10% by mass, preferably of 0.1 to 3.0% by mass, and more preferably of 0.1 to 2.0% by mass.
The content of compound (d) being in excess of the above range allows the compound (d) to be cross-linked by the carbodiimide group-containing compound (E) described below, which may make it difficult to produce the recycled carbon fiber-reinforced polyolefin composition. Moreover, the content being in the above range or less, enables production of the recycled carbon fiber-reinforced polyolefin composition, however, renders the less amount of a bonded moiety between the carbodiimide group-containing compound (E) and the modified polyolefin (D) which serves as a backbone of the modified polyolefin (D), thereby being unable to sufficiently improve reinforcement and dispersibility of recycled carbon fibers in the recycled carbon fiber-reinforced polyolefin composition.
For prevention of cross-linking, an number-average molecular weight of modified polyolefin (D) is preferably as low as possible and a molar ratio of (the number of moles of compound (d))/ (the number of moles of modified polyolefin (D)) is preferably as small as possible. This means that when compound (d) is present on a molecular chain of the modified polyolefin (D), with the number of which is near to a single instead of a multiple thereof, a carbodiimide group (N=C=N) of the carbodiimide group-containing compound (E) undergoes bonding without cross-linking or gelation upon reacting with the compound (d).
In the present invention, controlling the number-average molecular weight (Mn) of modified polyolefin (D) and the content of compound (d) makes it possible to prevent lowering of production stability due to cross-linking occurred in production of the modified polyolefin (A), and also to sufficiently improve the reinforcement and dispersibility of recycled carbon fibers when the modified polyolefin (A) is used to prepare a recycled carbon fiber-reinforced polyolefin composition. That is, the modified polyolefin (D) preferably satisfies the following formula (1) in the present invention.

$$0.1 < Mn/[(100-M) \times f/M] < 6 \quad \text{Formula (1)}$$

(wherein in the formula,

f: Molecular weight of compound (d) (g/mol)
M: Content of compound (d) (wt%)
Mn: Number-average molecular weight of modified polyolefin (d))

From the viewpoint of production stability of not allowing for cross-linking, the modified polyolefin (D) further preferably satisfies the range of Formula (2) below, and most preferably the range of Formula (3).

$$0.3 < Mn/[(100-M) \times f/M] < 6 \quad \text{Formula (2)}$$

$$0.5 < Mn/[(100-M) \times f/M] < 6 \quad \text{Formula (3)}$$

Relationship between the number-average molecular weight (Mn) of modified polyolefin (D) and that of compound (d) being within the above range enables the modified polyolefin (A) to be stably produced without cross-linking.

In the case of obtaining the modified polyolefin (D) by graft polymerization in the present invention, a polyolefin to be a graft main chain, with high ethylene content, such as a linear low-density polyethylene, tends to facilitate cross-linking upon production, as compared to a polyolefin with high amount of copolymerized $\alpha$-olefin, such as ethylene/1-butene copolymer. Therefore, in production using a polyolefin having high ethylene content as a graft main chain and inhibiting cross-linking, the compound (d) having a group that reacts with a carbodiimide group, is preferably adjusted to be present on a molecular chain of the modified polyolefin (D), with the number of compound (d) near to a single.

Moreover, in a case in which a polyolefin to be a graft main chain is a polyolefin undergoing lowering of molecular weights due to thermal decomposition, such as polypropylene, the phenomenon of high viscosity due to cross-linking is unlikely to occur. Therefore, in the case of using a polyolefin that easily undergoes thermal decomposition as a graft main chain, the modified polyolefin (A) may be able to be produced without a high viscosity, even though a plurality of compounds (d) is on a molecular chain of the modified polyolefin (D).

Note, however, a number-average molecular weight can be determined by general molecular weight measurement methods for polymers such as GPC, a light scattering method, a lowangle light scattering method, vapor pressure osmometry, and membrane osmometry.

A melt flow rate (MFR) of the modified polyolefin (D) according to the present invention in accordance with ASTM D1238 with a load of 2.16 kg and at 230°C is usually 0.01 to 500 g/10 minutes and preferably 0.05 to 300 g/10 min. Within the above range, a modified polyolefin (A) with excellent improvement effects of reinforcement and dispersibility of the recycled carbon fiber (C) can be obtained.

Moreover, the density of modified polyolefin (D) is usually 0.8 to 1.1 g/cm$^3$, preferably 0.8 to 1.05 g/cm$^3$, and further preferably 0.8 to 1.0 g/cm$^3$.

<Compound (d) having a group that reacts with a carbodiimide group>

The compounds (d) having a group that reacts with a carbodiimide group according to the present invention (hereinafter may be referred to as "compound (d)") include a compound having a group with active hydrogen having reactivity with a carbodiimide group, and specific examples thereof include compounds having a group derived from for example, a carboxylic acid, amine, alcohol, and thiol. Of these, compounds having a group derived from carboxylic acid are suitably used, with an unsaturated carboxylic acid and/or its derivatives being particularly preferred. Compounds having a group that easily undergoes conversion to a group with active hydrogen by for example, water, are also preferably used, in addition to compounds having a group with active hydrogen, and specific examples thereof include compounds having an epoxy group and a glycidyl group. In the present invention, one type of compound (d) may be used singly, or two or more thereof may be combined for use.

Unsaturated carboxylic acids and/or their derivatives used as the compounds (d) according to the present invention, may include an unsaturated compound having one or more carboxylic acid groups, an unsaturated compound having one or more anhydrous carboxylic acid groups and their derivatives, and the unsaturated groups include vinyl groups, vinylene groups, and unsaturated cyclic hydrocarbon groups.

Specific examples of the derivatives described above include unsaturated carboxylic acids such as acrylic acid, methacrylic acid, maleic acid, fumaric acid, tetrahydrophthalic acid, itaconic acid, citraconic acid, crotonic acid, isocrotonic acid, norbornenedicarboxylic acid, bicyclo[2,2,1]hept-2-en-5,6-dicarboxylic acid, or acid anhydrides or derivatives thereof (for example, acid halides, amides, imides, and esters). Examples of specific compounds include malonyl chloride, malenyl imide, maleic anhydride, itaconic anhydride, citraconic anhydride, tetrahydrophthalic anhydride, bicyclo[2,2,1]hept-2-en-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-en-5,6-dicarboxylate, hydroxyethyl (meth)acrylate, hydroxypropyl (meth)acrylate, glycidyl (meth)acrylate, aminoethyl methacrylate, and aminopropyl methacrylate.

In a case in which an unsaturated carboxylic acid and/or its derivatives are used as the compounds (d) according to the present invention, one type thereof can be used singly or two or more types thereof may be combined for use. Among these, preferred are maleic anhydride, (meth)acrylic acid, itaconic anhydride, citraconic anhydride, tetrahydrophthalic anhydride, bicyclo[2,2,1]hept-2-en-5,6-dicarboxylic anhydride, hydroxyethyl (meth)acrylate, glycidyl methacrylate, and aminopropyl methacrylate. Furthermore, particularly preferred are dicarboxylic anhydrides such as maleic anhydride, itaconic anhydride, citraconic anhydride, tetrahydrophthalic anhydride, and bicyclo[2,2,1]hept-2-en-5,6-dicarboxylic anhydride.

A method for introducing the compound (d) according to the present invention into a polyolefin, which is well-known methods, can be employed, and for example, a method of graft copolymerization (graft-modification) of the compound (d) into a polyolefin main chain, and a method of radical copolymerization of the compound (d) with olefin can be exemplified.

Methods of graft-modification and radical copolymerization each will be described in detail below.

<<Graft-modification>>

The modified polyolefin (D) according to the present invention is obtained by grafting the compound (d) into a polyolefin.

(Polyolefin)

A polyolefin in which the above compound (d) undergoes graft-modification is a polymer composed mainly of olefins, such as a homopolymer of $\alpha$-olefin having 2 to 6 carbon atoms, a copolymer of the $\alpha$-olefin and other $\alpha$-olefin (with 2 to 20 carbon atoms), and a copolymer of the $\alpha$-olefin and a monomer other than $\alpha$-olefin. Monomers other than $\alpha$-olefin include cyclic olefins, non-conjugated dienes, vinyl group-containing aromatic hydrocarbons, and vinylesters.

Specific examples of the polyolefin according to the present invention include ethylenic polymers composed mainly of ethylenes [polyethylenes], such as an ethylene homopolymer and a copolymer of ethylene and $\alpha$-olefin having 3 or more carbon atoms (ethylene/$\alpha$-olefin copolymer), propylene-based polymers composed mainly of propylenes [polypropylens], such as a propylene homopolymer and a copolymer of propylene with ethylene and/or $\alpha$-olefin having 4 or more carbon atoms, 1-butene-based polymers composed mainly of 1-butene [poly(1-butene)], such as a 1-butene homopolymer and a copolymer of 1-butene with ethylene, propylene and $\alpha$-olefin having 5 or more carbon atoms, and polymers such as a 4-methyl-1-pentene homopolymer and a copolymer of 4-methyl-1-pentene with other $\alpha$-olefin [poly(4-methyl-1-pentene)].

Moreover, these polyolefins can be used in both an isotactic structure and a syndiotactic structure, and stereoregularity thereof is not particularly limited.

The density of a polyolefin used for graft-modification is usually 0.8 to 1.1 g/cm$^3$, preferably 0.8 to 1.05 g/cm$^3$, and further preferably 0.8 to 1.0 g/cm$^3$, and the melt flow rate (MFR) at 230°C and a load of 2.16 kg in accordance with ASTM D 1238 is usually 0.01 to 500 g/10 minutes, preferably 0.05 to 300 g/10 minutes, and further preferably 0.1 to 100 g/10 minutes. The density and MFR within these ranges facilitate handling because a density and MFR of the graft copolymer after modification are approximately the same values.

Crystallinity of the polyolefin used for graft-modification is also usually 2% or higher, preferably 5% or higher, and further preferably 10% or higher. The crystallinity within this range renders excellent handleability of the graft copolymer after modification.

A number-average molecular weight (Mn) of the polyolefin used for graft-modification, as measured by gel permeation chromatography (GPC), is preferably 5,000 to 500,000 and more preferably 10,000 to 100,000. The number-average molecular weight (Mn) within this range renders excellent handleability. Note, however, the number-average molecular weight of polyethylene can be determined in terms of polyethylene when the amount of other $\alpha$-olefin copolymerized with ethylene is 10 mol% or less, or in terms of ethylenepropylene (based on the ethylene content of 70 mol%) when the amount is 10 mol% or more. Further, the number-average molecular weight of polypropylene can be determined in terms of polypropylene when the amount of other $\alpha$-olefin is 10 mol% or less, or in terms of propylene-ethylene (based on the propylene content of 70 mol%) when the amount is 10 mol% or more.

Such polyolefins can be produced by any of conventionally publicly known methods and they can be polymerized using for example, titanium-based catalysts, vanadium-based catalysts, and metallocene catalysts. Polyolefins used for graft-modification can be in the form of either resin or elastomer, and both isotactic structure and syndiotactic structure can be introduced, and stereoregularity thereof is not particularly limited. Commercially available resins can also be used as are.

(Method of graft-modification)

A method for grafting the compound (d) onto a polyolefin can be publicly known methods, which is for example, a method for dissolving a polyolefin in an organic solvent, adding the compound (d) and for example, a radical initiator to the resulting solution, and reacting them at a temperature of preferably 60 to 350°C, more preferably 80 to 190°C, preferably 0.5 to 15 hours, and more preferably 1 to 10 hours.

Examples of organic solvents for dissolving a polyolefin include aromatic hydrocarbon-based solvents such as benzene, toluene and xylene, and aliphatic hydrocarbon-based solvents such as pentane, hexane and heptane.

Examples of another method of graft-modification of polyolefins is a method for reacting a polyolefin and the compound (d) with a radical initiator in for example, an extruder in the absence of a solvent. In this case, a reaction temperature is usually a melting point of an olefinic polymer or higher, for example, 100 to 350°C, and a reaction time is usually 0.5 to 10 minutes.

Examples of radical initiators include publicly known radical initiators such as dicumyl peroxide, di-t-butyl peroxide, 2,5-dimethyl-2,5-di(t-butylperoxy)hexyne-3,2,5-dimethyl-2,5-di(t-butylperoxy)hexane and 1,4-bis(t-butylperoxyisopropyl)benzene. The radical initiator is preferably used at a proportion of 0.001 to 1 part by mass relative to 100 parts by mass of an olefinic polymer before modification.

<<Radical copolymerization>>

The modified polyolefin (D) according to the present invention can also be obtained by radical copolymerization of olefin and the compound (D). The olefin can be the same as olefin forming the polyolefin, and the compound (d) is also as described above.

A method for copolymerizing olefin and a compound having a group that reacts with a carbodiimide group is not particularly limited, and any conventionally publicly known radical copolymerization method can be employed.

<Carbodiimide group-containing compound (E)>

The carbodiimide group-containing compound (E) according to the present invention is a polycarbodiimide having a repeating unit represented by the following general formula (4) .

$$-N=C=N-R_1-  \quad  \text{Formula (4)}$$

[wherein in the formula, $R_1$ represents a divalent organic group.]

A synthesis method of the carbodiimide group-containing compound (E) according to the present invention is not particularly limited, and for example, a polycarbodiimide can be synthesized by reacting an organic polyisocyanate in the presence of a catalyst that promotes carbodiimidation reaction of an isocyanate group.

The number-average molecular weight (Mn) of the carbodiimide group-containing compound (E) according to the present invention in terms of polystyrene, as determined by gel permeation chromatography (GPC), is usually 400 to 500,000, preferably 1,000 to 10,000, and more preferably 1,500 to 4,000. The number-average molecular weight (Mn) thereof within this range enables the modified polyolefin (A) excellent in improvement effects of reinforcement and dispersibility of the recycled carbon fiber (C) to be obtained, which is preferred.

The carbodiimide group-containing compound (E) according to the present invention may contain monocarbodiimide in a polycarbodiimide, and may be used singly or in admixture of several carbodiimide group-containing compounds.

Note, however, commercially available carbodiimide group-containing compounds can also be used as are. Examples of commercially available carbodiimide group-containing compounds include CALBODILITE HMV-15CA and LA1 as well as HMV-5CA-LC (all are trade names) manufactured by Nisshinbo Holdings, Inc.

The contents of carbodiimide groups in the carbodiimide group-containing compound (E) and the resulting modified polyolefin (A) can be measured by for example, $^{13}$C-NMR, IR, a titration method, and can be regarded as a carbodiimide equivalent. $^{13}$C-NMR can demonstrates a peak at 130 to 142 ppm, and IR can demonstrates a peak at 2130 to 2140 cm$^{-1}$.

$^{13}$C-NMR measurement can be performed, for example, as follows. That is, 0.35 g of sample is heated and dissolved in 2.0 ml of hexachlorobutadiene. After filtering this solution through a glass filter (G2), 0.5 ml of deuterated benzene is added and the mixture is charged into an NMR tube with an inner diameter of 10 mm. $^{13}$C-NMR measurement is performed at 120°C using a GX-500 NMR apparatus manufactured by JEOL Ltd. The number of integration times is 10,000 times or more.

IR measurement is performed, for example, as follows. That is, a sample was fabricated into a heat-pressed sheet at 250°C for 3 minutes, and then an IR absorption spectrum is measured by a transmission method by using an IR spectrophotometer (FT-IR 410 type, manufactured by JASCO Corporation). Measurement conditions are as follows: resolution is 2 cm$^{-1}$ and the number of integration times is 32 times.

<Modified polyolefin (A)>

A modified polyolefin (A) that is one of the components of the recycled carbon fiber-reinforced polyolefin composition of the present invention, is a modified polyolefin obtained by reacting a modified polyolefin (D) having a group that reacts with the above carbodiimide groups and the above carbodiimide group-containing compound (E).

A method for reacting the above modified polyolefin (D) with the above carbodiimide group-containing compound (E) can be specifically a method of melting modification by being melt kneaded, but is in no way limited thereto.

For example, in the case of melt kneading the modified polyolefin (D) having a group that reacts with a carbodiimide group and the carbodiimide group-containing compound (E), the method of melting modification by being melt kneaded, is a method for simultaneously or sequentially mixing the modified polyolefin (D) and the carbodiimide group-containing compound (E), for example, with a Henschel mixer, V-type blender, tumbler blender, or ribbon blender, or by feeding them without mixing into pieces of kneading apparatus such as a single screw extruder, multiple screw extruder, kneader, Banbury mixer. Among these pieces of kneading apparatus, use of apparatus with excellent kneading performance, such as a multiple screw extruder, kneader, or Banbury mixer, makes it possible to obtain a modified polyolefin (A) in which the modified polyolefin (D) and the carbodiimide group-containing compound (E) are further uniformly dispersed and reacted, which is preferred.

The modified polyolefin (D) and carbodiimide group-containing compound (E) can be supplied by either of a method for preliminarily mixing them and then supplying the mixture from a feed port of a kneading apparatus, or a method for supplying a portion of the components from the feed port and supplying the other components from a supply port disposed at an arbitrarily part between a vicinity of the feed port and the tip of the extruder.

A temperature for reacting each component upon melt kneading the modified polyolefin (D) and the carbodiimide group-containing compound (E) can be a temperature of the highest melting point or higher among those of the components, but specifically, it is usually 150 to 300°C, preferably 200 to 280°C, and further preferably 230 to 270°C.

The modified polyolefin (A) according to the present invention has excellent flowability at 230°C. The melt flow rate (MFR) of the modified polyolefin (A) at 230°C and a load of 2.16 kg is usually within the range of 0.01 to 400 g/10 minutes, preferably 0.1 to 300 g/10 minutes, and further preferably 1 to 200 g/10 minutes. Such a range is preferred because of excellent reinforcement and dispersibility of fillers.

In producing the modified polyolefin (A) according to the present invention, a ratio of the number of moles of the compound (d) having a group that reacts with a carbodiimide group in the modified polyolefin (D) to the number of moles of the carbodiimide group-containing compound (E) being a ratio so as to satisfy the formula below, allows that a modified polyolefin (A) with high reaction efficiency of the compound (d) and the carbodiimide group-containing compound (E) and with excellent flowability, is obtained, which is preferred.

The number of moles of (d): the number of moles of (E) = 1:0.2 to 1.6, preferably 1:0.4 to 1.3, further preferably 1:0.7 to 1.1.

Moreover, the amount of carbodiimide group-containing compound (E) compounded is usually 1 to 200 mmol, preferably 2 to 150 mmol, further preferably 4 to 100 mmol, of the content of carbodiimide groups, relative to 100 grams of a modified polyolefin (A) in which the modified polyolefin (D) and the carbodiimide group-containing compound (E) were reacted. The content of carbodiimide groups being too few does not enable a reinforcement effect and dispersibility of the recycled carbon fibers (C) to be exhibited, and that being too large results in lowering of molding processability of the resulting recycled carbon fiber-reinforced polyolefin composition and not so much reinforcement effect and not so much improvement effect of dispersibility of the recycled carbon fiber (C), which is not economical.

Furthermore, it is important to control reaction between the compound (d) in the modified polyolefin (D) and a carbodiimide group in the carbodiimide group-containing compound (E), in modified polyolefin (A) according to the present invention. The degree of proceeding of the reaction between the compound (d) in the modified polyolefin (D) and the carbodiimide group-containing compound (E) can be investigated, for example, by the following method.

A heat-pressed sheet of the modified polyolefin (D) and that of a modified polyolefin (A) obtained by reacting the modified polyolefin (D) with the carbodiimide group-containing compound (E), were prepared, respectively, and infrared absorption of each is then measured by using an infrared absorption analyzer. From the resulting chart, absorbance of an absorption band (1790 cm$^{-1}$ in the case of maleic anhydride) due to the peak intensity of the compound (d) having a group that reacts with the carbodiimide group in the modified polyolefin (D) and the modified polyolefin (A), respectively, is compared with absorbance of the carbodiimide group-containing compound (E) before an after the reaction, then to calculate a reaction ratio according to the following formula:

$$\texttt{Reaction ratio (\%) = (X/Y) × 100}$$

X = Difference in intensities of groups reacting with carbodiimide groups (before reaction (D) - after reaction (A))
Y = Intensity of groups that react with carbodiimide groups before reaction (D)

The reaction ratio determined by the aforementioned method for the modified polyolefin (A) according to the present invention, is usually within the range of 40 to 100%, preferably 50 to 100%, and further preferably 60 to 100%.

Note, however, carbodiimide groups are partially converted to urea groups by water absorption, and furthermore, the urea groups thermally decompose to form amino groups, however, the urea groups and amino groups are still highly reactive with for example, the modified polyolefins (D), and therefore, the recycled carbon fiber-reinforced polyolefin composition of the present invention, may contain polyolefins in which the carbodiimide groups are partially converted to urea groups or amino groups by for example, water in the atmosphere, which is also one of preferred aspects of the present invention.

Moreover, the modified polyolefin (A) according to the present invention is produced by reaction of a carbodiimide group (N=C=N) of the carbodiimide group-containing compound (E) with the compound (d) having a group that reacts with a carbodiimide group, as described above, and a certain amount of carbodiimide groups is consumed in the course of the reaction, which allows the carbodiimide residues connected to a polyolefin as the same molecular chain to interact with a filler, contributing to the reinforcement and dispersibility. The amount of carbodiimide residues can be interpreted as a peak size due to shrinkage vibration of N=C=N groups at 2130 to 2140 $cm^{-1}$ in IR measurement.

The modified polyolefin (A) according to the present invention may contain two or more types of modified polyolefin (D) having a group that reacts with carbodiimide groups, and may also contain two or more types of carbodiimide group-containing compounds (E).

<Polyolefin (B)>

A polyolefin (B) that is one of the components contained in the recycled carbon fiber-reinforced polyolefin composition of the present invention, is polymers composed mainly of olefin, such as a homopolymer of α-olefin having 2 to 6 carbon atoms, a copolymer of the α-olefin and other α-olefins (having 2 to 20 carbon atoms) in the same category as polyolefins used to obtain the modified polyolefin (D) according to the present invention described above, and a copolymer of the α-olefin and a monomer other than the α-olefin, and monomers other than α-olefin include cyclic olefins, non-conjugated dienes, vinyl group-containing aromatic hydrocarbons, and vinylesters.

Specific examples of the polyolefin (B) according to the present invention include ethylenic polymers composed mainly of ethylenes [polyethylenes:PE], such as an ethylene homopolymer and a copolymer of ethylene and α-olefin having 3 or more carbon atoms (ethylene/α-olefin copolymer), propylene-based polymers composed mainly of propylenes [polypropylens:PP], such as a propylene homopolymer and a copolymer of propylene with ethylene and/or α-olefin having 4 or more carbon atoms, 1-butene-based polymers composed mainly of 1-butene [poly(1-butene):PB], such as a 1-butene homopolymer and a copolymer of 1-butene with ethylene, propylene and α-olefin having 5 or more carbon atoms, and polymers such as a 4-methyl-1-pentene homopolymer and a copolymer of 4-methyl-1-pentene with other α-olefin [poly(4-methyl-1-pentene)].

Moreover, these polyolefins (B) can be used in both an isotactic structure and a syndiotactic structure, and stereoregularity thereof is not particularly limited.

The density of the polyolefin (B) according to the present invention is usually 0.8 to 1.1 $g/cm^3$, preferably 0.8 to 1.05 $g/cm^3$, and further preferably 0.8 to 1.0 $g/cm^3$, and the melt flow rate (MFR) at 230°C and a load of 2.16 kg in accordance with ASTM D 1238 is usually 0.01 to 500 g/10 minutes, preferably 0.05 to 300 g/10 minutes, and further preferably 0.1 to 100 g/10 minutes. The density and MFR within these ranges, respectively, renders favorable molding processability of the recycled carbon fiber-reinforced polyolefin composition obtained by using polyolefin (B).

Among these polyolefins (B), preferable is polypropylene because of its excellent heat resistance and rigidity.

<Recycled carbon fiber (C)>

The recycled carbon fiber (C) that is one of the components of the recycled carbon fiber-reinforced polyolefin composition of the present invention, is carbon fiber obtained by burning treatment or heat steam treatment of carbon fiber-reinforced materials (CFRP) that are waste materials. Carbon fibers used in CFRP are usually treated with a sizing agent to inhibit carbon fibers from stranding each other and to prevent carbon fibers from scattering when dispersed in a resin. Moreover, an impact strength of CFRP is higher than that of untreated carbon fibers because of improvement in compatibility of CFRP with a resin by a sizing agent.

However, dispersibility and compatibility of recycled carbon fibers with a resin are poor because the sizing agent is lost in burning treatment or heat steam treatment, and the surface of the recycled carbon fiber is present in an immaculate state, whereby recycled carbon fibers that could not be kneaded into the resin upon extrusion processing accumulate at the tip of the extruder, causing problems of productivity of CFRP, such as unstability of the strand, and making it difficult to obtain a CFRP molded product with sufficient impact strength.

The recycled carbon fiber (C) according to the present invention is not limited as long as an average fiber length thereof is within the range of 0.05 to 15.0 mm, and recycled carbon fibers obtained by burning treatment or heat steam treatment of CFRP waste materials can be used. The average fiber length within this range is unlikely to cause scattering and fiber breakage upon processing, from which the reinforced polyolefin composition containing such recycled carbon fibers renders favorable productivity of molded products, and the resulting molded product has excellent mechanical properties.

The recycled carbon fiber (C) according to the present invention preferably has an average fiber length of 0.1 to 5.0 mm.

Note, however, the fiber length of the recycled carbon fiber (C) can be calculated by observing a fiber in a field of view with a magnification of 100 times using an optical microscope such as "Digital Microscope VHX-100" (manufactured by KEYENCE CORPORATION) and taking an average value of fiber lengths of 50 carbon fibers observed in the field of view.

Specific examples of the recycled carbon fibers (C) according to the present invention include CARBISO MF series (average fiber length: 0.08 to 0.1 mm), manufactured by ELG Carbon Fibre Ltd., CARBISO C series (average fiber length: 3 to 10 mm), CARBISO CT series (average fiber length: 6 to 12 mm), and pyrolysis products manufactured by Carbon Fiber Recycle Industry co., ltd..

Carbon fibers are usually treated with a surface sizing agent, and a surface oxygen concentration ratio (O/C), which is a ratio of the number of oxygen (O) atoms and carbon (C) atoms on a fiber surface as measured by X-ray photoelectron spectroscopy (XPS), usually has a value of 0.05 or more, and the higher the surface oxygen concentration ratio (O/C), the higher the amount of functional groups on the carbon fiber surface, and the lower the surface oxygen concentration ratio (O/C), the lower the amount of functional groups on the carbon fiber surface.

Since the surface sizing agent, on the other hand, is thermally decomposed when the recycled carbon fibers (C) undergo the burning treatment or heat steam treatment, resulting in the extremely low amount of functional groups on the fiber surface and the low surface oxygen concentration ratio (O/C) of less than 0.05.

The surface oxygen concentration ratio (O/C) of carbon fibers is determined by X-ray photoelectron spectroscopy according to the following procedure. First, a carbon fiber is cut and laid out spread on a copper sample support, then a photoelectron escape angle is set to 90°, AlKα is used as an X-ray source, and a sample chamber is maintained at $1 \times 10^{-8}$ Torr. A kinetic energy value (K.E.) of the main peak of C1S was set to 969 eV as correction for a peak accompanying charge upon the measurement. An C1S peak area is obtained by drawing a straight baseline in the range of 958 to 972 eV as K.E.. An O1S peak area is obtained by drawing a straight baseline in the range of 714 to 726 eV as K.E.. Here, the surface oxygen concentration ratio (O/C) is calculated as a ratio of the number of atoms from the ratio of the above O1S peak area to the C1S peak area, using the sensitivity correction value specific to the apparatus.

A means of controlling the surface oxygen concentration ratio (O/C) is not particularly limited, but can be for example, methods such as electrolytic oxidation treatment, chemical oxidation treatment, and vapor phase oxidation treatment, with the electrolytic oxidation treatment being preferred among them.

<Recycled carbon fiber-reinforced polyolefin composition>

The recycled carbon fiber-reinforced polyolefin composition of the present invention is a recycled carbon fiber-reinforced polyolefin composition containing the above modified polyolefin (A) in an amount of 0.01 to 50 parts by mass and preferably 0.1 to 30 parts by mass, the above polyolefin (B) in an amount of 50 to 99 parts by mass and preferably 60 to 90 parts by mass, and the above recycled carbon fibers (C) in an amount of 1 to 80 parts by mass and preferably 5 to 50 parts by mass, wherein a total of (A), (B) and (C) is 100 parts by mass.

The content of the above modified polyolefin (A) may be for example, 4.5 to 50 parts by mass, 4.5 to 30 parts by mass, 5.5 to 30 parts by mass, 6.5 to 30 parts by mass, 7.5 to 30 parts by mass, 8.5 to 30 parts by mass or 9.5 to 30 parts by mass.

The content of the above recycled carbon fiber (C) can be for example, 10 to 80 parts by mass, 10 to 50 parts by mass or 15 to 50 parts by mass.

The recycled carbon fiber-reinforced polyolefin composition of the present invention, containing the modified polyolefin (A) in the above range, provides favorable dispersibility between the polyolefin (B) and the recycled carbon fiber (C) and excellent adhesiveness between the recycled carbon fiber (C), and the modified polyolefin (A) and the polyolefin (B), thereby enabling a molded product with excellent mechanical properties such as heat resistance, rigidity, and impact strength to be obtained.

The content of recycled carbon fiber (C) being less than the above range is unable to provide a reinforcement effect of resins due to the fibers, and the content exceeding the above range may result in loss of toughness.

The recycled carbon fiber-reinforced polyolefin composition of the present invention preferably has a content of carbodiimide groups contained in the polyolefin component of the recycled carbon fiber-reinforced polyolefinic resin composition, of 0.0001 to 140 mmol relative to 100 g of the polyolefin component. It is more preferably 0.01 to 10 mmol/100 g.

The content of carbodiimide groups within the above range makes it possible to further improve dispersibility of fillers and to easily and economically produce a desired structural product. Moreover, the content of carbodiimide groups being too small does not allow the dispersibility of fillers to be exhibited, and the content of fillers being too large reduces molding processability and an improvement effect of filler dispersibility is not so effective and uneconomical.

The recycled carbon fiber-reinforced polyolefin composition of the present invention may contain for example, publicly known softening agents, adhesion-imparting agents, anti-aging agents, processing aids, adhesiveness-imparting agents, heat stabilizers, weathering stabilizers, antistatic agents, coloring agents, lubricants, flame retardants, and anti-blooming agents, to the extent where the purpose of the present invention is not impaired.

<Molded product>

Molded products of the recycled carbon fiber-reinforced polyolefin composition of the present invention can be produced by various publicly known molding methods, specifically such as injection molding, blow molding, press molding, calendar molding, extrusion molding, and stamping mold molding.

Molded products composed of the recycled carbon fiber-reinforced polyolefin composition of the present invention are used in a wide range of applications from household products to industrial products. Molded products obtained by such methods include for example, electric parts, electronic parts, automotive parts, machine mechanism components, food containers, films, sheets, and fibers, and more specific examples thereof include office and office automation equipment such as printers, personal computers, word processors, keyboards, PDAs (small information terminal equipment), telephone sets, facsimiles, copiers, electronic cash register (ECR), calculators, electronic notebooks, electronic dictionaries, cards, holders, and stationery; home appliances such as washing machines, refrigerators, vacuum cleaners, microwave ovens, lighting equipment, game machines, irons, and kotatsu; AV equipment such as TV, VTR, video cameras, radio-cassette recorders, tape recorders, minidiscs, CD players, speakers, and liquid crystal displays; electrical and electronic components such as connectors, relays, capacitors, switches, printed circuit boards, coil bobbins, semiconductor encapsulating materials, wires, cables, transformers, deflection yokes, distribution boards, and clocks; and telecommunications equipment.

Moreover, the molded products obtained by such methods include materials for automobiles, vehicles, ships, aircraft and construction, such as seats (such as stuffing, and outer materials), belts, ceiling covering, compartible tops, armrests, door trims, rear package trays, carpets, mats, sun visors, wheel covers, tires, mattress covers, air bags, insulating materials, hangers, hanger bands, wire covering materials, electrical insulating materials, paints, coating materials, top layers, flooring materials, corner walls, deck panels, covers, plywood, ceiling boards, partition boards, side walls, carpets, wallpaper, wall coverings, exterior materials, interior materials, roofing materials, soundproofing boards, thermal insulation boards, and window materials; and household and sporting goods, such as clothing, curtains, sheets, plywood, synthetic boards, carpets, entrance mats, sheets, buckets, hoses, containers, glasses, bags, cases, goggles, ski boards, rackets, tents, and musical instruments.

[Examples]

The present invention will be described more specifically based on Examples below, however the present invention is not limited to these Examples. In description of the examples below, "part" denotes "parts by mass" unless otherwise specified.

(Various measurement methods)

In for example, the Examples, measurements were performed according to the following methods.

[Melt flow rate (MFR)]

MFR was measured at 230°C under a load of 2.16 kg in accordance with ASTM D1238.

[Number-average molecular weight (Mn)]

The number-average molecular weight (Mn) was measured by GPC.
Specifically, a gel permeation chromatograph Alliance GPC-2000 manufactured by Waters Corporation was used.
Two TSKgel GMH6-HT columns and two TSKgel GMH6-HTL columns were used as separation columns, both with a diameter of 7.5 mm and a length of 300 mm, and a column temperature was 140°C, a mobile phase for use was o-dichlorobenzene (manufactured by Wako Pure Chemical Industries, Ltd.) containing a 0.025% by weight antioxidant (butyl hydroxytoluene, manufactured by Takeda Chemical Industries, LTD.), with a moving rate of 1.0 ml/min, a sample concentration was 15 mg/10 mL, a sample injection volume was 500 microliters, and a differential refractometer was used as a detector.
Standard polystyrenes manufactured by TOSOH CORPORATION were used for molecular weights of Mw < 1,000 and Mw > $4 \times 10^6$, and those manufactured by Pressure Chemical Company were used for molecular weights of $1000 \leq Mw \leq 4 \times 10^6$.

When using maleic anhydride-modified polypropylene, Mn thereof was calculated in terms of polypropylene conversion.

For example, the modified polyolefins (A) used in Examples and Comparative Examples are shown below.

[Modified polyolefin (A)]

A CDI-PP1 produced by the following production method was used as the modified polyolefin (A). <Production of modified polyolefin (A)>

A maleic anhydride-modified polypropylene PP1 as the modified polyolefin (D), and CARBODILITE HMV-15CA manufactured by Nisshinbo Chemical Inc., as the carbodiimide group-containing compound (E), were prepared, respectively, and HMV-15CA was mixed at a proportion of 4.4 parts by mass, relative to 100 parts by mass of PP1, and the mixture was extruded using a twin-screw extruder (KTX-30 manufactured by Kobe Steel, Ltd.) at a cylinder temperature of 270°C, screw speed of 200 rpm, and a throughput of 10 kg/h to obtain a CDI-PP1 as the modified polyolefin (A). The content of carbodiimide groups of the obtained CDI-PP1 was 10.7 mmol/100 g. Note, however, the content of carbodiimide groups was determined by measuring an infrared absorption spectrum using a transmission method with an infrared spectrophotometer (FT-IR 410 type manufactured by JEOL Ltd.) after having molded a sheet obtained by heat pressing a sample at 250°C for 3 minutes. The measurement conditions were a resolution of 2 cm$^{-1}$ and the number of integration times of 32.

[Modified polyolefin (D)]

A maleic anhydride-modified polypropylene PP1 (D-1) was used as the modified polyolefin (D). The content of maleic anhydride of PP1 was 0.6% by mass, the number-average molecular weight Mn determined by GPC was 50,180, and Mn/[(100-M) $\times$ f/M] was 3.1.

[Carbodiimide group-containing compound (E)]

CARBODILITE HMV-15CA (E-1) with a carbodiimide equivalent of 262 g/mol manufactured by Nisshinbo Chemical Inc., as the carbodiimide group-containing compound (E), was used.

[Polyolefin (B)]

PP2 (J106G manufactured by Prime Polymer Co., Ltd.) MFR (230°C): 15 g/10 minutes), (B-1), which was a homopolypropylene, was used as polyolefin (B).

[Recycled carbon fiber (C)]

A recycled carbon fiber CF1 manufactured by Carbon Fiber Recycle Industry Co., Ltd. (primarily heated, a 3 mm classified and cut product with fiber surface oxygen concentration ratio O/C = 0.03) (C-1) was used as the recycled carbon fiber (C).

[Example 1]

5 parts by mass of the aforementioned CDI-PP1 as the modified polyolefin (A), 75 parts by mass of the above (B-1) as the polyolefinic resin (B), and 20 parts by mass of the above (C-1) as the recycled carbon fiber (C), were mixed and extruded using a twin-screw extruder (KTX-30 manufactured by Kobe Steel, Ltd.) at a cylinder temperature of 200°C, screw speed of 200 rpm, and a throughput of 10 kg/h to obtain a recycled carbon fiber-reinforced polyolefinic resin composition (RCFRPP1).

The resulting recycled carbon fiber-reinforced polyolefinic resin composition (RCFRPP1) was injection-molded in an injection molding machine (50T manufactured by MEIKI CO., LTD.) at a cylinder temperature of 250°C and a mold temperature of 40°C, and an Izod impact strength (IZOD) and a bending strength (FS) of a molded product were measured.

The Izod impact strength was measured in accordance with ASTM D256 using 1/8-inch-thick injection-molded specimens (machining notch and cutting notch) under a 23°C atmosphere.

The bending strength in a three-point bending test was measured using injection-molded specimens with a length of 2.5 inches, width of 1/2 inches, and thickness of 1/8 inches, under the conditions of a span of 48 mm and a compression rate of 5 mm/minute in a 23°C atmosphere.

The results are shown in Table 1.

[Example 2]

A recycled carbon fiber-reinforced polyolefinic resin composition (RCFRPP2) was obtained in the same manner as in Example 1, except that the amount added of CDI-PP1 used in Example 1 was 10 parts by mass, and physical properties of the molded product obtained by the same molding method as in Example 1 were measured.
The results are shown in Table 1.

[Examples 3 and 4]

Recycled carbon fiber-reinforced polyolefinic resin compositions were obtained in the same manner as in Example 1, except that amounts added of CDI-PP1, (B-1), and (C-1) used in Example 1 were changed as described in Table 1, and physical properties of the molded products obtained by the same molding method as in Example 1 were measured.
The results are shown in Table 1.

[Comparative Example 1]

A recycled carbon fiber-reinforced polyolefinic resin composition (RCFRPP3) was obtained in the same manner as in Example 1, except that a maleic anhydride modified polypropylene-based resin PP3 (amount of acid functional groups = 5.5 mmol, Mn = 14,000, Mn/[(100-M) $\times$ f/M] = 0.8) was used instead of CDI-PP1 used in Example 1, and physical properties were measured by the method as described in Example 1.
The results are shown in Table 2.

[Comparative Example 2]

A recycled carbon fiber-reinforced polyolefinic resin composition (RCFRPP4) was obtained in the same manner as in Comparative Example 1, except that the amount added of maleic anhydride modified polypropylene resin PP3 used in Comparative Example 1 was 10 parts by mass, and physical properties of the molded product obtained by the same molding method as in Example 1 were measured.
The results are shown in Table 2.

[Comparative Example 3]

A recycled carbon fiber-reinforced polyolefinic resin composition (RCFRPP5) was obtained in the same manner as in Example 1, by using 80 parts by mass of the above (B-1) and 20 parts by mass of the above (C-1), without using the CDI-PP1 used in Example 1, and physical properties of the molded product obtained by the same molding method as in Example 1 were measured.
The results are shown in Table 2.

[Comparative Example 4]

A recycled carbon fiber-reinforced polyolefinic resin composition was obtained in the same manner as in Comparative Example 1, except that the contents of PP3, PP2, and C-1 were changed as listed in Table 2, and physical properties of the molded product obtained by the same molding method as in Example 1 were measured.
The results are shown in Table 2.

[Reference Example 1]

As Reference Example 1, a carbon fiber-reinforced polyolefinic resin composition (RCFRPP6) was obtained in the same manner as in Example 1, except that CF1 that was the recycled carbon fiber (C) used in Example 1, was replaced with a carbon fiber CF2 (HTC702, a 6 mm chopped product with a fiber surface oxygen concentration ratio O/C of 0.20, manufactured by TEIJIN LIMITED,) containing a sizing agent, and physical properties of the molded product obtained by the same molding method as in Example 1 were measured.
The results are shown in Table 2.

[Reference Example 2]

As Reference Example 2, a carbon fiber-reinforced polyolefinic resin composition (RCFRPP7) was obtained in the same manner as in Comparative Example 2, except that CF1 that was the recycled carbon fiber (C) used in Comparative Example 2, was replaced with a carbon fiber CF2 (HTC702, a 6 mm chopped product with a fiber surface oxygen concentration ratio O/C of 0.20, manufactured by TEIJIN LIMITED,) containing a sizing agent, and physical properties of the molded product obtained by the same molding method as in Example 1 were measured.

Table 2 shows the results.

[Table 1]

| | | | | | Ex. 1 | Ex. 2 | Ex. 3 | Ex. 4 |
|---|---|---|---|---|---|---|---|---|
| | | | | Composition | RCFRPP1 | RCFRPP2 | | |
| Compounding prescription (parts by weight) | (A) | CDI-PP1 | carbodiimide group-containing PP | | 5 | 10 | 2.5 | 5 |
| | | PP3 | Maleic anhydride-modified PP | | | | | |
| | (B) | PP2 | PP | | 75 | 70 | 77.5 | 87 |
| | (C) | CF1 | Recycled carbon fiber | | 20 | 20 | 20 | 8 |
| | | CF2 | Carbon fiber (with a sizing agent) | | | | | |
| | | Amount of functional groups | mmol | | 0.54 | 1.07 | 0.27 | 0.54 |
| Physical properties | | Items | Units | | | | | |
| | | FS | Bending | MPa | 160 | 228 | 150 | 74 |
| | | IZOD | Impact | J /m | 97 | 102 | 64 | 61 |

[Table 2]

| | | | | | Comp. Ex. 1 | Comp. Ex. 2 | Comp. Ex. 3 | Comp. Ex. 4 |
|---|---|---|---|---|---|---|---|---|
| | | | | Composition | RCFRPP3 | RCFRPP4 | RCFRPP5 | |
| Compounding prescription (parts by weight) | (A) | CDI-PP1 | carbodiimide group-containing PP | | | | | |
| | | PP3 | Maleic anhydride-modified PP | | 5 | 10 | | 10 |
| | (B) | PP2 | PP | | 75 | 70 | 80 | 82 |
| | (C) | CF1 | Recycled carbon fiber | | 20 | 20 | 20 | 8 |
| | | CF2 | Carbon fiber (with a sizing agent) | | | | | |
| | | Amount of functional groups | mmol | | 0.28 | 0.55 | 0.00 | 0.55 |

(continued)

| | | | | Comp. Ex. 1 | Comp. Ex. 2 | Comp. Ex. 3 | Comp. Ex. 4 |
|---|---|---|---|---|---|---|---|
| | | | Composition | RCFRPP3 | RCFRPP4 | RCFRPP5 | |
| Physical properties | Items | | Units | | | | |
| | FS | Bending | MPa | 142 | 144 | 87 | 67 |
| | IZOD | Impact | J /m | 48 | 49 | 31 | 31 |
| | | | | Ref. Ex. 1 | | Ref. Ex. 2 | |
| | | | Composition | RCFRPP6 | | RCFRPP7 | |
| Compounding prescription (parts by weight) | (A) | CDI-PP1 | carbodiimide group-containing PP | 5 | | | |
| | | PP3 | Maleic anhydride-modified PP | | | 10 | |
| | (B) | PP2 | PP | 75 | | 70 | |
| | (C) | CF1 | Recycled carbon fiber | | | | |
| | | CF2 | Carbon fiber (with a sizing agent) | 20 | | 20 | |
| | Amount of functional groups | | mmol | 0.54 | | 0.55 | |
| Physical properties | Items | | Units | | | | |
| | FS | Bending | MPa | 248 | | 242 | |
| | IZOD | Impact | J /m | 81 | | 82 | |

**Claims**

1. A recycled carbon fiber-reinforced polyolefin composition, comprising

0.01 to 50 parts by mass of a modified polyolefin (A),
50 to 99 parts by mass of a polyolefin (B), and
1 to 80 parts by mass of a recycled carbon fiber (C), wherein a total of (A), (B) and (C) is 100 parts by mass, and wherein the modified polyolefin (A) is a modified polyolefin obtained by reacting a modified polyolefin (D) having a group that reacts with a carbodiimide group, with a carbodiimide group-containing compound (E).

2. The recycled carbon fiber-reinforced polyolefin composition according to claim 1, wherein the recycled carbon fiber (C) has a surface oxygen concentration ratio O/C of less than 0.05 as measured by X-ray photoelectron spectroscopy (XPS).

3. The recycled carbon fiber-reinforced polyolefin composition according to claim 1 or 2, wherein the modified polyolefin (A) has a content of carbodiimide groups in the range of 1 to 200 mmol relative to 100 grams of modified polyolefin (D).

4. The recycled carbon fiber-reinforced polyolefin composition according to any one of claims 1 to 3, wherein the modified polyolefin (D) has a maleic anhydride group.

5. The recycled carbon fiber-reinforced polyolefin composition according to any one of claims 1 to 4, wherein the polyolefin (B) and the modified polyolefin (D) are each polypropylene.

6. The recycled carbon fiber-reinforced polyolefin composition according to any one of claims 1 to 5, wherein the content of the modified polyolefin (A) is from 4.5 to 50 parts by mass.

7. The recycled carbon fiber-reinforced polyolefin composition according to any one of claims 1 to 6, wherein the content of the recycled carbon fiber (C) is 10 to 80 parts by mass.

8. A molded product formed of the recycled carbon fiber-reinforced polyolefin composition according to any one of claims 1 to 7.

## INTERNATIONAL SEARCH REPORT

International application No.

**PCT/JP2022/007220**

### A. CLASSIFICATION OF SUBJECT MATTER

***C08F 8/30***(2006.01)i; ***C08K 7/06***(2006.01)i; ***C08L 23/00***(2006.01)i; ***C08L 23/36***(2006.01)i; ***C08J 5/04***(2006.01)i
FI: C08L23/00; C08L23/36; C08K7/06; C08F8/30; C08J5/04 CES

According to International Patent Classification (IPC) or to both national classification and IPC

### B. FIELDS SEARCHED

Minimum documentation searched (classification system followed by classification symbols)

C08K3/00-13/08; C08L1/00-101/14; C08J5/04-5/10; C08J5/24; C08F6/00-246/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | WONG, K. H. et al. Effect of coupling agents on reinforcing potential of recycled carbon fibre for polypropylene composite. Composites Science and Technology. 2012, vol. 72, pp. 835-844 in particular, abstract, 2. Experimental procedure, 3. Results and discussion, fig. 4-5, 12, 14 | 1-8 |
| Y | WO 2009/069649 A1 (MITSUI CHEMICALS, INC) 04 June 2009 (2009-06-04) claims 1-9, paragraphs [0006]-[0007], [0010]-[0011], [0104], examples, comparative examples | 1-8 |
| Y | JP 2015-081262 A (DOSHISHA) 27 April 2015 (2015-04-27) claims 1-15, paragraphs [0010], [0021], [0040]-[0051] | 1, 3-8 |
| A | | 2 |
| A | CN 109486018 A (THE UNIVERSITY OF NOTTINGHAM NINGBO CHINA) 19 March 2019 (2019-03-19) claims 1-10, examples | 1-8 |
| A | JP 2020-176244 A (TOYO INK SC HOLDINGS CO LTD) 29 October 2020 (2020-10-29) claims 1-4, examples | 1-8 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| | International application No. |
|---|---|
| | **PCT/JP2022/007220** |

**C. DOCUMENTS CONSIDERED TO BE RELEVANT**

| Category* | Citation of document, with indication, where appropriate, of the relevant passages | Relevant to claim No. |
|---|---|---|
| A | JP 2019-163354 A (TAKAROKU SHOJI KK) 26 September 2019 (2019-09-26)<br>claims 1-10, examples | 1-8 |
| A | JP 2013-166921 A (TORAY IND INC) 29 August 2013 (2013-08-29)<br>claims 1-12, examples | 1-8 |
| P, X | JP 2021-161375 A (SUMITOMO CHEMICAL CO) 11 October 2021 (2021-10-11)<br>claims 1-4, paragraphs [0042]-[0088], example 4 | 1-8 |

Form PCT/ISA/210 (second sheet) (January 2015)

## INTERNATIONAL SEARCH REPORT
### Information on patent family members

International application No.

**PCT/JP2022/007220**

| Patent document cited in search report | | | Publication date (day/month/year) | Patent family member(s) | | Publication date (day/month/year) |
|---|---|---|---|---|---|---|
| WO | 2009/069649 | A1 | 04 June 2009 | US 2010/0311892 A1 claims 1-9, paragraphs [0006]-[0007], [0010]-[0011], [0119], examples, comparative examples<br>EP 2221339 A1<br>KR 10-2010-0089888 A<br>CN 101878266 A | | |
| JP | 2015-081262 | A | 27 April 2015 | (Family: none) | | |
| CN | 109486018 | A | 19 March 2019 | (Family: none) | | |
| JP | 2020-176244 | A | 29 October 2020 | (Family: none) | | |
| JP | 2019-163354 | A | 26 September 2019 | (Family: none) | | |
| JP | 2013-166921 | A | 29 August 2013 | US 2014/0356612 A1 claims 1-15, examples<br>WO 2013/108811 A1<br>EP 2805995 A1<br>TW 201335263 A<br>CN 104066783 A<br>KR 10-2014-0114342 A | | |
| JP | 2021-161375 | A | 11 October 2021 | US 2021/0301093 A1 claims 1-12, paragraphs [0092]-[0144], example 4<br>EP 3889216 A1<br>CN 113462072 A | | |

Form PCT/ISA/210 (patent family annex) (January 2015)

18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003277525 A
- JP 2015110749 A
- JP 2017082037 A